# EUROPEAN PATENT APPLICATION

(11) **EP 4 613 887 A1**
(43) Date of publication of application: **10.09.2025**
(21) Application number: 24162110.1
(22) Date of filing: 07.03.2024
(51) Int. Cl.: C22B 3/10, B01J 19/12, C22B 7/00, C22B 11/00

(54) **MICROWAVE ASSISTED LEACHING PROCESS**

(71) Applicant: VITO NV, 2400 Mol (BE)
(72) Inventor: KUKURUGYA, Frantisek, 2400 Mol (BE); SPOOREN, Jeroen, 2400 Mol (BE)
(74) Representative: AWA Benelux

(57) **Abstract**

The present invention relates to a microwave (MW) assisted leaching method (1) for extracting a PGM from a PGM-comprising product, comprising: providing (2) an aqueous leaching solution comprising HCl and NaCl; adding (3) a product comprising a PGM to the aqueous leaching solution; heating (4) the aqueous leaching solution to a temperature between 120 °C and 250 °C by means of MW heating, thereby obtaining a slurry comprising a leachate comprising the PGM and a solid residue; cooling (5) the slurry; and separating (6) the leachate from the solid residue, thereby obtaining the extracted PGM; wherein the concentration of HCl, NaCl and chloride anions in the aqueous leaching solution is between 0.25 M and 5 M, between 0.5 M and 5 M, and equal to or higher than 2 M, respectively.

## Description

### Technical field

The present invention is related to a microwave (MW) assisted leaching process for extraction of valuable metals, in particular Platinum Group Metals (PGMs), from products comprising one or more of such PGMs.

### Background art

PGMs, or Platinum Group Metals, include platinum, palladium, rhodium, ruthenium, iridium, and osmium. Among these metals, platinum, palladium and rhodium are typically used in catalytic converters.

The recovery processes for PGMs typically involve several steps, depending on the source of the metals and the desired end product. Many of these processes are known for being energy-intensive, producing significant gaseous emissions, and generating potentially hazardous waste streams. Moreover, during the subsequent recovery of PGMs from smelter concentrates, their solubilization involves the application of strongly concentrated acids containing, e.g. HCl-Cl₂ mixtures or cyanides, which are hazardous to both the environment and human health.

Microwave (MW) assisted leaching has emerged as a promising metal extraction technology. Leaching involves the use of a solvent to extract valuable metals from a solid material. The application of microwaves in leaching processes offers several advantages over traditional methods, including enhanced leaching reaction kinetics (leading to improved leaching rates and reduced leaching duration), improved selectivity, and efficient heating of the reaction mixture, thus reducing energy consumption compared to traditional heating methods. However, despite recent advances in MW technology, its application in leaching processes has been limited due to the challenges of operating under harsh conditions.

Recovery by hydrometallurgical extraction of the platinum-group metals from car catalytic converters, D. Jimenez de Aberasturi, R. Pinedo, et al., Minerals Engineering Volume 24, Issue 6 (2011), pages 505-513, discloses a recovery process for PGMs comprising pre-treatment of car catalysts at 250 °C for 22 h, followed by MW assisted leaching via dissolution in a solution of 12 M HCl, 18 M H₂SO₄ and H₂O₂ at 90 °C for 6 hours. Up to 95 % of the PGMs can be recovered.

Single-step hydrometallurgical method for the platinum group metals leaching from commercial spent automotive catalysts, Yakoumis, Moschovi, et al., Journal of Sustainable Metallurgy 6 (2020), pages 259-268, discloses a leaching process for the extraction of PGMs from spent automobile catalysts. An aqueous leaching solution comprising 3 M to 6 M HCl, 3 M to 6 M NaCl as additional chloride source, as well as 1 % v/v H₂O₂ (30 %) as oxidation agent is used, and the process requires long leaching times (2 to 3 hours) at 70 °C.

Disadvantages of the foregoing MW assisted leaching processes include the need for high concentrations of chemicals, and consequently the generation of large amounts of waste solutions, which are often corrosive, as well as the need for an additional oxidation agent. A further disadvantage is the long leaching processes.

Fast microwave leaching of platinum, rhodium and cerium from spent non-milled autocatalyst monolith, T. Abo Atia and J. Spooren, Chemical Engineering and Processing - Process Intensification, Volume 164 (2021) 108378 discloses a MW assisted leaching process for recovery of PGMs from spent automotive catalysts. MW assisted leaching of a solid source of PGMs is performed in a solution of 6 M HCl having a liquid-to-solid ratio of 10 at 220 °C for 3 minutes, and allows to achieve high yields (>95 %) for Pd, Rh and Ce. It is further mentioned in this publication that when leaching with a 1 M HCl + 3.8 M NaCl with the same liquid-to-solid ratio and at the same leaching temperature and duration, significantly lower recovery efficiencies (yields) of below 70 % are obtained. In other words, according to this study high concentrations of HCl (6 M) are required to recover PGMs at a high recovery rate, whereas the use of lower concentrations do not lead to efficient recovery processes.

There is thus a need for processes that allow recovery of PGMs at high efficiencies of at least 70 %, and preferably at least 75 % or higher, from PGM-comprising products, wherein the concentration of chemicals used can be reduced and wherein the need for any oxidation agents can be minimized, thereby reducing the concentrations of toxic and/or harmful chemicals used and/or possibly formed.

### Summary of the invention

The present invention aims to overcome one or more of the above drawbacks. It is an aim of the invention to provide a method which has a minimal reagent usage and thus significantly reduces the use of toxic and/or harmful chemicals, while providing high extraction rates of valuable metals, and in particular rhodium (Rh). It is a further aim to provide a method having a reduced energy consumption when compared to existing leaching methods, and/or a shorter duration. Yet another aim is to provide a highly selective method allowing for the extraction of valuable metals at high yields, i.e. a method which allows removal (i.e. leaching, or extraction) of PGMs from PGMs-comprising products at a high extraction (i.e. leaching) efficiency (i.e. yield) with limited extraction of other elements or compounds of the product. Another aim is to provide a method which is capable of extracting valuable metals from a wide range of products including, without being limited thereto, End of Life (EoL) products, primary ore materials and by-products from metallurgical production (for example anode slime).

The terms "yield", "extraction yield", "extraction efficiency", "leaching yield" and "leaching efficiency" are interchangeably used in the present disclosure. The term "yield" refers to the percentage of a certain component, in particular a metal, that is extracted (i.e. leached) from a material, such as an End of Life (EoL) product, by means of a leaching process, i.e. by means of a solid/liquid extraction process.

In the present disclosure, a high yield, i.e. a high extraction efficiency, is used for an extraction efficiency which is at least 60%, preferably at least 65 %, more preferably at least 75%, more preferably at least 80 %. In other words, a high yield is used in the present disclosure when at least 60%, preferably at least 65 %, more preferably at least 75%, more preferably at least 80 %, of a compound, component or element is extracted (i.e. leached) from a product.

Similarly, a low yield, i.e. a low extraction efficiency, is used for an extraction efficiency which is at most 50 %, preferably at most 45 %, more preferably at most 40 %. In other words, a low yield is used in the present disclosure when at most 50 %, preferably at most 45 %, more preferably at most 40 % of a compound, component or element is extracted (i.e. leached) from a product.

Advantageously, in the light of the present disclosure, i.e. the extraction of a PGM from products comprising such a PGM by means of the methods of the present disclosure, the term "highly selective method" is used for methods allowing to extract (i.e. leach) a PGM from a PGM-comprising product at high yields, while at the same time showing a low extraction efficiency for other elements, components or compounds of the product, such as (without being limited thereto and depending on the composition of the product) aluminium (Al), cerium (Ce) and magnesium (Mg).

According to a first aspect of the invention, there is provided a microwave (MW) assisted leaching method as set out in the appended claims.

The MW assisted leaching method is a method for extracting a Platinum Group Metal (PGM) from a product comprising a PGM.

The method comprises providing an aqueous leaching solution comprising HCl and NaCl.

The concentration of HCl in the aqueous leaching solution is between 0.25 M and 5 M, preferably between 1 M and 2.5 M.

The concentration of NaCl in the aqueous leaching solution is between 0.5 M and 5 M, preferably between 1.5 M and 3 M.

The total concentration of chloride anions in the aqueous leaching solution is equal to or higher than 2 M, preferably equal to or higher than 2.5 M, more preferably equal to or higher than 3 M.

Advantageously, the concentration of HCl in the aqueous leaching solution is between 1 M and 2.5 M and the concentration of NaCl in the aqueous leaching solution is between 1.5 M and 3 M.

The method further comprises adding a product, in particular an End of Life (EoL) product, comprising a PGM to the aqueous leaching solution.

The aqueous leaching solution comprising the PGM-comprising product is then heated to a temperature between 120 °C and 250 °C by means of MW heating (i.e. MW assisted heating). Upon MW assisted heating to a temperature between 120 °C and 250 °C, the PGM in the product leaches from the product into the aqueous solution (i.e. solid/liquid extraction), thereby obtaining a slurry comprising a leachate comprising the PGM and a solid residue. Advantageously, the solid residue is the product from which the PGM have at least partially (i.e. at least for 70 %, more preferably at least 75 %) been extracted.

Advantageously, once the MW heating is completed, the slurry is cooled down and the leachate is separated from the solid residue, thereby obtaining the leachate comprising the extracted PGM dissolved therein.

Advantageously, the solid residue is further washed, for example with fresh lixiviant, after the separation operation. Washing advantageously further removes any residual PGM present on the solid residue, thereby further increasing the PGM extraction efficiency.

Advantageously, in the method according to the invention, the aqueous solution comprising the product comprising the PGM has a liquid-to-solid ratio between 5 and 10, such as 6, 7, 8 or 9. The liquid-to-solid ratio is the weight ratio of (the weight of) the aqueous solution to (the weight of) the product. In other words, a lower liquid-to-solid ratio means a higher weight of product for the same weight of aqueous solution when compared to a higher liquid-to-solid ratio. It will be understood that a lower liquid-to-solid ratio thus means that for the same product (same weight) the amount of HCl and NaCl (and water) can be lower, thereby reducing the amount of chemicals used and the energy required to heat the aqueous solution comprising the product to the required temperature for leaching.

Advantageously, the aqueous leaching solution is heated to a temperature between 150 °C and 220 °C, preferably between 160 °C and 200 °C, such as between 170 °C and 180 °C.

Advantageously, the aqueous leaching solution is heated for a duration between 1 minute and 1 hour, preferably between 2 minutes and 45 minutes, more preferably between 3 minutes and 30 minutes, such as between 5 minutes and 20 minutes.

With "heated for a duration of ..." is meant the total duration for heating up the aqueous solution, i.e. for reaching the respective temperature, and the dwelling time, i.e. the duration at which the aqueous solution is maintained at this respective temperature. The dwelling time is typically between 1 minute and 10 minutes; preferably between 2 minutes and 8 minutes, more preferably between 3 minutes and 6 minutes.

Advantageously, the aqueous leaching solution comprising the product is stirred during heating. The stirring can be performed by any means known in the art. Advantageously, the stirring is performed at a speed between 10 rpm and 2000 rpm, preferably between 50 rpm and 1000 rpm, such as between 100 rpm and 500 rpm.

Advantageously, the leachate is separated from the solid residue by means of one or more of filtration, centrifugation and decantation. It will be understood that other suitable methods known in the art can be used as well.

Advantageously, the PGM-comprising product comprises one or more of platinum (Pt), palladium (Pd) and rhodium (Rh).

Advantageously, the product comprises one or more of an EoL product, for example an EoL automotive catalyst (i.e. a spent automotive catalyst or spent autocatalyst), an electrolyser or a fuel cell, or a Waste Electrical and Electronic Equipment (WEEE). Alternatively or additionally, yet advantageously, the PGM-comprising product comprises a PGM-comprising ore material, such as a primary PGM ore material, and/or comprises or substantially consists of a by-product from metallurgical production, such as anode slime.

Advantageously, the PGM-comprising product further comprises one or more of Au, Ag, Ni, Cu, Zn, Sn and Pb. Advantageously, when the product further comprises one or more of Au, Ag, Ni, Cu, Zn, Sn and Pb, at least one of the one or more of Au, Ag, Ni, Cu, Zn, Sn and Pb are extracted from the product by the method of the first aspect. In other words, at least one of the one or more of Au, Ag, Ni, Cu, Zn, Sn and Pb are comprised, i.e. dissolved, in the leachate after the heating operation.

The present disclosure is further related to the use of the method of the first aspect for the extraction of a PGM from a PGM-comprising product. Advantageously, the PGM-comprising product is as described hereinabove.

The inventors have surprisingly discovered that when using MW heating for MW assisted leaching as described hereinabove, in particular at the temperatures described, allows to extract the PGM or PGMs from a wide range of products at high leaching efficiencies of at least 60 %, in particular for one or more of Pt, Pd and especially Rh - of which the latter has proven to be difficult to recover at high yields by means of existing methods, while the concentration of acidic compounds, in particular HCl and NaCl, can be significantly decreased compared to existing processes, below what is considered feasible in the art. More, even at such low acidic concentrations, the methods of the invention do not need the use of additional oxidation agents, as is commonly required in prior art methods. The absence of any oxidation agents also decreases the risk for the formation of dangerous gasses.

Further, even at such low concentrations, the inventive methods allow to reduce the heating duration significantly and show a high selectivity for leaching primarily PGMs, which is believed to be related to the optimal composition of the aqueous solution together with the use of microwaves for heating and the heating temperatures claimed.

### Brief description of the figures

Aspects of the invention will now be described in more detail with reference to the appended drawings, wherein same reference numerals illustrate same features and wherein:
Figure 1 schematically represents a method of the present disclosure.
Figure 2A shows the concentration of Pd in the leachate and the mass loss of the dried solid residue for eight inventive leaching methods and two reference leaching methods in function of the total chloride anion concentration in the aqueous solution.
Figure 2B shows the concentration of Pt in the leachate and the pH of the leachate for eight inventive leaching methods and two reference leaching methods in function of the total chloride anion concentration in the aqueous solution.
Figure 2C shows the concentration of Rh in the leachate and the ORP of the leachate for eight inventive leaching methods and two reference leaching methods in function of the total chloride anion concentration in the aqueous solution.
Figure 3 shows the concentration of Pd, Pt and Rh in the leachate for two methods of the invention having a different heating duration.
Figure 4 shows the recovery efficiency of Pd, Pt and Rh for a reference solution and an inventive solution MW heated at different temperatures.
Figure 5 shows the mass loss for a reference leaching process and a MW assisted leaching process of the invention.
Figure 6 shows the recovery efficiency of Pd, Pt and Rh in function of the L/S ratio for a MW assisted leaching process of the invention.
Figure 7 shows the concentration of matrix elements Al, Ce and Mg in the leachate after MW heating of a spent automotive catalyst according to a method of the invention.

### Description of embodiments

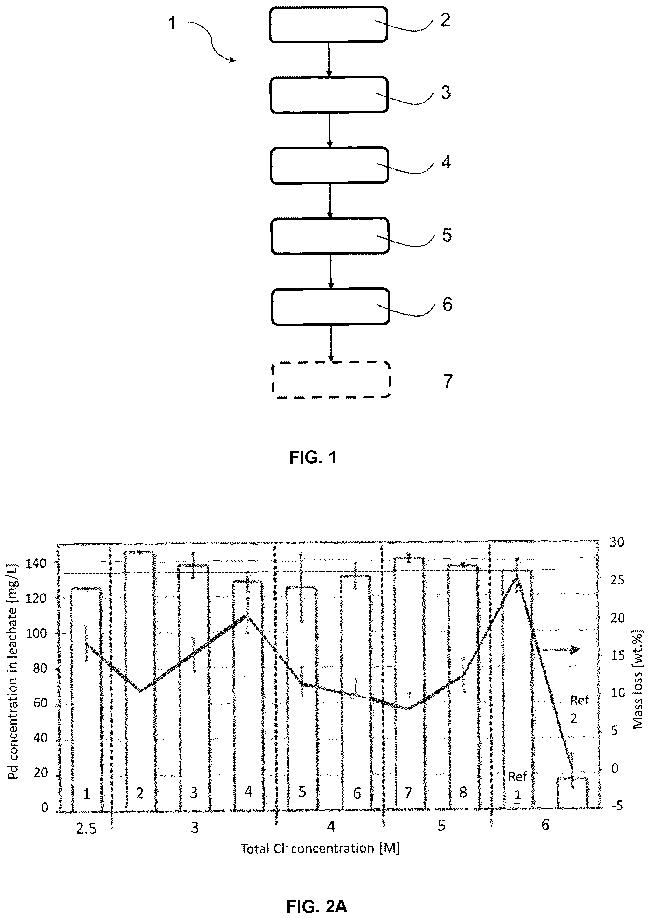

Figure 1 schematically shows the MW assisted leaching method 1 for extracting one or more Platinum Group Metals (PGMs) from a product comprising one or more PGMs. The method 1 comprises an operation 2 of providing an aqueous leaching solution comprising HCl and NaCl, an operation 3 of adding a product comprising a PGM to the aqueous leaching solution, an operation 4 of heating the aqueous leaching solution comprising the product to a temperature between 120 °C and 250 °C by means of MW heating, a cooling operation 5 and a separation operation 6. The method 1 further optionally comprises a washing and/or drying operation 7.

The concentration of HCl in the aqueous leaching solution is between 0.25 M and 5 M, preferably between 0.5 M and 3 M, more preferably between 1 M and 2.5 M, such as between 1.5 M and 2 M.

The concentration of NaCl in the aqueous leaching solution is between 0.5 M and 5 M, preferably between 1 M and 4 M, more preferably between 1.5 M and 3 M, such as between 1.5 M and 2 M.

The total concentration of chloride anions in the aqueous leaching solution is equal to or higher than 2 M, preferably equal to or higher than 2.5 M, more preferably equal to or higher than 3 M, such as 3.5 M or 4 M.

Advantageously, the concentration of HCl in the aqueous leaching solution is between 0.25 M and 5 M, and the concentration of NaCl in the aqueous leaching solution is between 0.5 M and 5 M, preferably between 0.5 M and 3 M and between 1 M and 4 M, respectively, more preferably between 1 M and 2.5 M and between 1.5 M and 3 M, respectively.

The use of an aqueous solution comprising NaCl in addition to HCl as source of chloride anions allows to reduce the cost of the process since NaCl is cheaper than HCl. Further, the reduced concentration of HCl when compared to prior art processes, as well as the use of NaCl further renders the aqueous solution less corrosive, which poses less strain on working with the aqueous solution and less strain on the equipment used.

Advantageously, the aqueous solution provided in operation 2 does not comprise an oxidating agent in addition to HCl and NaCl. This reduces the risk of the formation of any harmful and/or toxic gases. Advantageously, the aqueous solution does not comprise any further additives, i.e. substantially consists of water, HCl and NaCl.

Non-limiting examples of suitable products comprising one or more PGMs include spent automotive catalysts, WEEEs, PV panels, electrolysers, fuel cells, ore materials and by-products of metallurgical processes, such as anode slime. Depending on the product and the use thereof, it can comprise one or more PGMs. Additionally yet advantageously, the product further comprises one or more of Au, Ag, Ni, Cu, Zn, Sn and Pb. When the product further comprises one or more of Au, Ag, Ni, Cu, Zn, Sn and Pb, at least one of the one or more of Au, Ag, Ni, Cu, Zn, Sn and Pb are advantageously also extracted by the methods of the present disclosure, i.e. leached from the product into the leachate upon MW assisted heating.

Advantageously, the product added to the aqueous solution in operation 3 can have any shape. For example, it can be as recovered from the source where it was used, or it can be pre-treated to provide and add it in a particulate form, for example by milling or pulverizing the product prior to adding it to the aqueous solution. For example, when the product comprises or substantially consist of a spent automotive catalyst, the catalyst can be in added in its original shape, or can be processed into particles, pellets or a powder for easy storage, transportation and addition to the aqueous solution.

Advantageously, heating operation 4 comprises or substantially consists of microwave (MW) assisted heating. Microwaves are electromagnetic waves with frequencies between 300 MHz and 300 GHz. When the microwaves interact with the aqueous solution comprising the PGM-comprising product, they can generate heat rapidly due to the absorption of energy by polar and/or ionic molecules or elements within the solution, in particular water molecules and salt ions. The presence of HCl and NaCl in the aqueous solution significantly enhances the absorption of microwaves, thereby allowing a faster heating. Consequently, this allows to reduce the duration of heating up to a predetermined temperature when compared to traditional, mostly thermal, heating methods.

In an embodiment the aqueous solution provided in operation 2 can be pre-heated, for example by means of a heat exchanger that allows for the transfer of heat from the material that has been already treated in the heating operation 4 to the fresh mixture of product and aqueous solution that is entering from operation 3. By this, the total energy consumption of the process is reduced.

Advantageously, the heating operation 4 comprises a phase of heating up and a dwelling phase. During heating up, the aqueous solution comprising the EoL product is heated by means of MW heating to a predetermined temperature. During the dwelling phase, the aqueous solution is maintained at the predetermined temperature.

Advantageously, the MW heating allows heating the solution at a heating rate between 1 °C/min and 100 °C/min, preferably between 2 °C/min and 75 °C/min, more preferably between 5 °C/min and 50 °C/min, most preferably between 10 °C/min and 40 °C/min. It will be understood that the heating rate depends on the equipment used - both the container (or vessel) comprising the solution (dimensions, shape, surface area) and the MW heating source, the volume of the solution to be heated, more particularly the ratio of the volume of the solution to the surface of the vessel, and the predetermined heating temperature.

Since the aqueous solution is heated to temperatures above the boiling point of water, the heating vessel or container comprising the aqueous solution comprising the PGM-comprising product is advantageously closed so as to avoid the loss of water vapour. Consequently, since pressure build-up within the container is to be expected, the vessel is advantageously also capable of withstanding such pressures.

Upon finishing the heating operation 4, a slurry is obtained. The slurry comprises a leachate and a solid residue. Advantageously, any PGM(s) and/or other elements or compounds leached (i.e. extracted) from the product during the heating operation 4 are comprised (i.e. dissolved) in the leachate. Consequently, the solid residue advantageously is the remainder of the product, i.e. the product minus all elements and compounds that were extracted, i.e. leached, from it during the heating operation 4.

The slurry comprising the leachate and the solid residue is then cooled during operation 5. The cooling operation 5 is advantageously performed by means known in the art.

Advantageously, the cooling operation 5 comprises an active cooling, such as passing a gas flow or a cooling liquid having a temperature lower than the temperature of the slurry around the slurry. For example, the vessel containing the slurry can be actively cooled by cooling the walls of the vessel, such as by passing a cooling liquid in a jacket placed around the vessel. The cooling gas or liquid will thus heat up during the cooling of the slurry and can be cooled by passing a heat exchanger, thereby cooling the gas or liquid for reuse in the cooling operation 5 and recuperating energy which can be reused during the heating operation 4. By this, the total energy consumption of the process is reduced.

Alternatively or additionally, yet advantageously, the cooling operation 5 comprises a passive cooling, such as exposing the slurry to an environment, e.g. a gas or gas mixture such as air, at a temperature below the temperature of the slurry. The heated gas or gas mixture, e.g. the air, can then be cooled by passing a heat exchanger, thereby cooling the gas or gas mixture for reuse in the cooling operation 5 and recuperating energy which can be reused during the heating operation 4. By this, the total energy consumption of the process is reduced.

The solid residue is then separated from the leachate in operation 6. The separation operation 6 can be performed by techniques and methods known in the art to separate a solid fraction from a liquid fraction. Non-limiting examples include filtration, centrifugation and decantation, and any combinations thereof, such as centrifugation followed by decantation.

Advantageously, the leachate comprises at least 60 % by weight, preferably at least 75 % by weight, more preferably at least 80 % by weight of the PGM that was comprised in the product prior to adding it to the aqueous solution in operation 3.

In other words, the yield or extracting efficiency of the PGM, such as Pd, Pt and/or Rh, is advantageously at least 60 %, preferably at least 75 %, more preferably at least 80 % expressed as the percentage of the PGM in the product that is present in the leachate. The percentage of the PGM in the product that is present in the leachate can be expressed as a percentage by weight or a percentage by mole.

Optionally, the solid residue is washed and/or dried during operation 7, in particular to remove any remaining water, HCl and NaCl, and/or any leached PGM(s) still present on the exterior surfaces of the solid residue. Advantageously, the washing operation allows to increase the extraction efficiency by a further 1 to 5 %.

Advantageously, when the solid residue is washed, the washing is performed by methods known in the art. In particular, water or fresh lixiviant is used to wash the solid residue.

Advantageously, when the solid residue is dried, the drying is performed by methods known in the art. Non-limiting examples comprise blow drying, heating, and vacuum drying.

Advantageously, when the solid residue is washed and dried, it is first washed and then dried. This allows to recuperate the washing liquid for recycling and/or re-use, thereby reducing the environmental footprint of the entire process.

### Examples

### Example 1

Eight inventive aqueous solutions were prepared by adding the required amounts of HCl (liquid) and NaCl (solid) to water to obtain the solutions as listed in Table 1. The solutions were stirred to dissolve the NaCl.

Two reference aqueous solutions were also prepared, one containing 6 M HCl and no NaCl, and one containing 6 M NaCl and no HCl.

None of the eight inventive and two reference solutions contained an additional oxidating agent.

Next, spent automotive catalyst as EoL product was added to the aqueous solutions in a liquid-to-solid ratio of 10.

**Table 1: aqueous solutions**

| **Solution No.** | **HCl (M)** | **NaCl (M)** | **Cl⁻ concentration (M)** |
|---|---|---|---|
| **1** | 1 | 1.5 | 2.5 |
| **2** | 0.5 | 2.5 | 3 |
| **3** | 1 | 2 | 3 |
| **4** | 1.5 | 1.5 | 3 |
| **5** | 1 | 3 | 4 |
| **6** | 2 | 2 | 4 |
| **7** | 1 | 4 | 5 |
| **8** | 2 | 3 | 5 |
| **Ref. 1** | 6 | 0 | 6 |
| **Ref. 2** | 0 | 6 | 6 |

The solution comprising the automotive catalyst was then heated by means of MW heating to a temperature of 150 °C. The MW heating comprised irradiation in multimode by a dual magnetron system (950 W each) working at 2.45 GHz. The heating included 15 minutes heating from room temperature to the 150 °C and 10 minutes maintaining the mixture at 150 °C (i.e. dwelling), i.e. a total heating duration of 25 minutes. During heating, the mixture was stirred by means of a magnetic stir bar placed in the vessel containing the mixture.

A slurry comprising as solid residue the spent automotive catalyst from which Pt, Pd and Rh were leached, and as leachate the aqueous solution comprising dissolved Pt, Pd and Rh, was obtained from each aqueous solution, and they all were cooled for 30 minutes to room temperature.

The slurries were then filtered by vacuum Büchner filtration using a 0.45 µm Whatman filter paper to separate the solid residue from the leachate. The solid residues were then washed with water and dried.

The pH and the oxidation-reduction potential (ORP) of the leachates were measured. Further, the leachates were analysed by Inductively Coupled Plasma Optical Emission Spectroscopy (ICP-OES) to determine the concentration of Pd, Pt and Rh in the leachate (unit: mg/mL leachate).

The solid residue was weighted after drying to determine its mass loss, defined as the weight difference of the automotive catalyst (weight prior to leaching - weight after leaching) divided by the original weight of the spent automotive catalyst.

Figure 2A shows the Pd concentration in the leachate (columns) and the mass loss (line) in function of the total chloride anion concentration of the aqueous solutions (see Table 1). It is clear that with Solution No. Ref. 2 (no HCl), the Pd extraction efficiency is very low (very low Pd concentration in the leachate), attributed to the absence of any acidic environment required for leaching, whereas with Solution No. Ref. 1 more than 130 mg/mL was detected in the leachate. Further, solutions Nos. 2, 3, 6, 7 and 8 show Pd concentrations similar and even higher than for solution No. 1, while at the same time the total chloride anion concentration, and the concentration of HCl were lower - the maximum HCl concentration being tested was 2 M (3 times less) and excellent results for chloride anion concentrations as low as 3 M.

It is further clear from Figure 2A that the mass loss for all inventive solutions Nos. 1-8 is significantly lower than the mass loss of solution No. Ref. 1, indicating that the inventive methods and solutions leaches less matrix elements such as Al, Ce and Mg from the spent automotive catalyst and are thus more selective. Solution No. Ref. 2 has a very low mass loss and a very low Pd extraction, indicating that this solution has a very low reactivity overall.

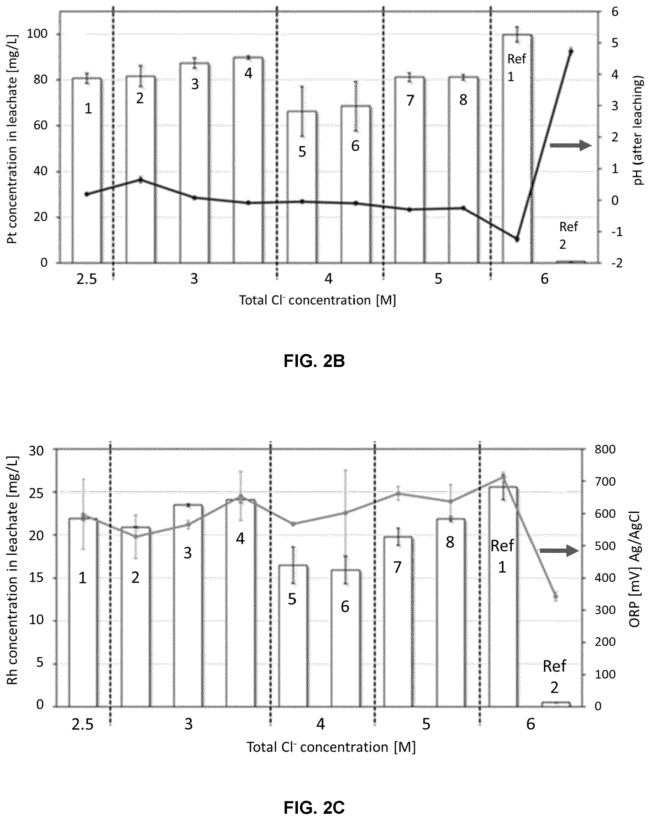

Figure 2B shows the Pt concentration in the leachate (columns) and the pH of the leachate (line) in function of the total chloride anion concentration of the aqueous solutions (see Table 1). It is clear that with Solution No. Ref. 2 (no HCl), almost no Pt was extracted - as expected, whereas with Solution No. Ref. 1 approx. 100 mg/mL was detected in the leachate. Here, all tested inventive solutions showed good Pt yields of at least 60 % of that of the reference solution Ref. 1, while at the same time the total chloride anion concentration, and the concentration of HCl was lower - the maximum HCl concentration being tested was 2 M (3 times less) and excellent results for chloride anion concentrations as low as 2.5 M.

Figure 2C shows the Rh concentration in the leachate (columns) and the ORP of the leachate (line) in function of the total chloride anion concentration of the aqueous solutions (see Table 1). It is clear that with Solution No. Ref. 2 (no HCl), almost no Rh was extracted - as expected (less than 5 mg/mL leachate), whereas with Solution No. Ref. 1 approx. 25 mg/mL was detected in the leachate. For all inventive solutions, the leaching rate of Rh was slightly lower than for the reference solution Ref. 1, with the highest yields obtained for solutions Nos. 2, 3 and 4 (total chloride concentration of 3 M). A drop in the Rh leaching was noticed for solutions Nos. 5 and 6.

### Example 2

The impact of the heating duration for MW heating was tested by using solution No. 4 (1.5 M HCl + 1.5 M NaCl) of Example 1. A heating temperature of 150 °C was used in each test, and the L/S ratio of the aqueous solution comprising the spent automotive catalyst was the same for each solution (US ratio of 10). In addition to the 25 minutes heating duration, a 10 minutes heating duration was tested as well.

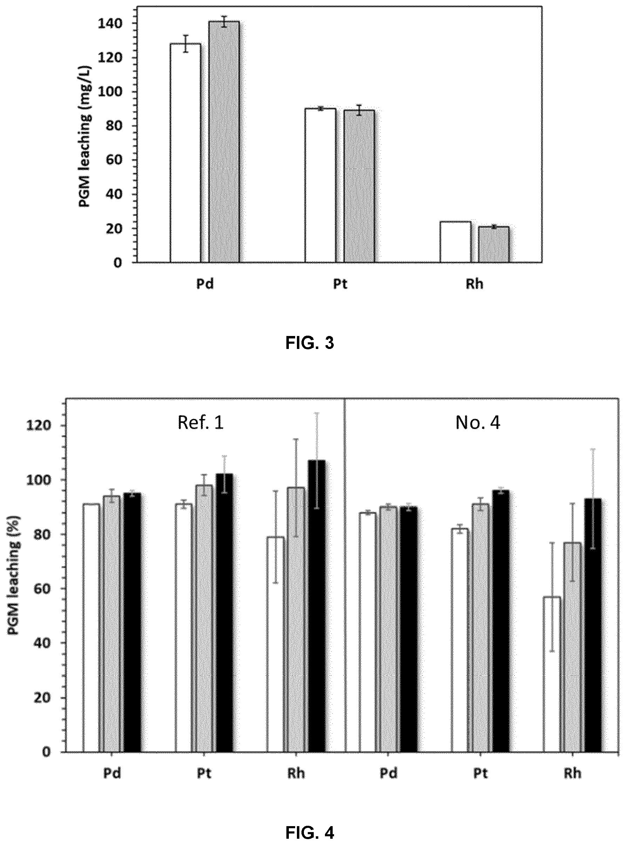

Figure 3 shows the concentrations of Pd, Pt and Rh in the leachate for 25 minutes heating (white columns) and 10 minutes heating (grey columns). It is clear that similar results are obtained for durations as short as only 10 minutes, which is a significant reduction compared to prior art processes typically requiring hours.

### Example 3

The impact of the heating temperature was tested by using solution Nos. 4 (1.5 M HCl + 1.5 M NaCl) and Ref. 1 of Example 1. The volume of aqueous solution used for each test was 500 mL, and the amount of spent automotive catalyst 50 g (US ratio of 10).

The heating equipment used was a single MW reactor configuration with monomode MW irradiation of 2.45 GHz (Milestone@ SynthWave). The heating duration for each test was 10 minutes, and the solution was stirred at 295 rpm during heating. The tested temperatures were 150 °C, 180 °C and 200 °C.

Figure 4 shows the leaching efficiency (in %) of Pd, Pt and Rh in the leachate for 150 °C (white columns), 180 °C (grey columns) and 200 °C (black columns) for both the reference solution No. Ref. 1 and solution No. 4. For all temperatures, the leaching efficiency for Pd and Pt is similar for both solutions, whereas for Rh the inventive solution shows slightly lower yields. Further, the impact of increasing heating temperature is limited for Pd, whereas for Pt a small improvement is noticed for both tested solutions. The largest impact of the temperature is noticed for the extraction of Rh, where the yield significantly increases with increasing temperature, from moderate levels at 150 °C to high yields at 180 °C and 200 °C.

The mass loss, expressed as the difference in weight of the spent automotive catalyst in the aqueous solution and the weight of the solid residue after MW heating, separation from the slurry and drying, divided by the weight of the spent automotive catalyst, was also calculated for both solutions and all three temperatures. The mass loss is a measure for the selectivity of the leaching process, wherein a higher mass loss indicates the extraction of matrix elements of the spent automotive catalyst in addition to the leached Pt, Pd and Rh, in particular matrix elements such as Al, Ce and Mg.

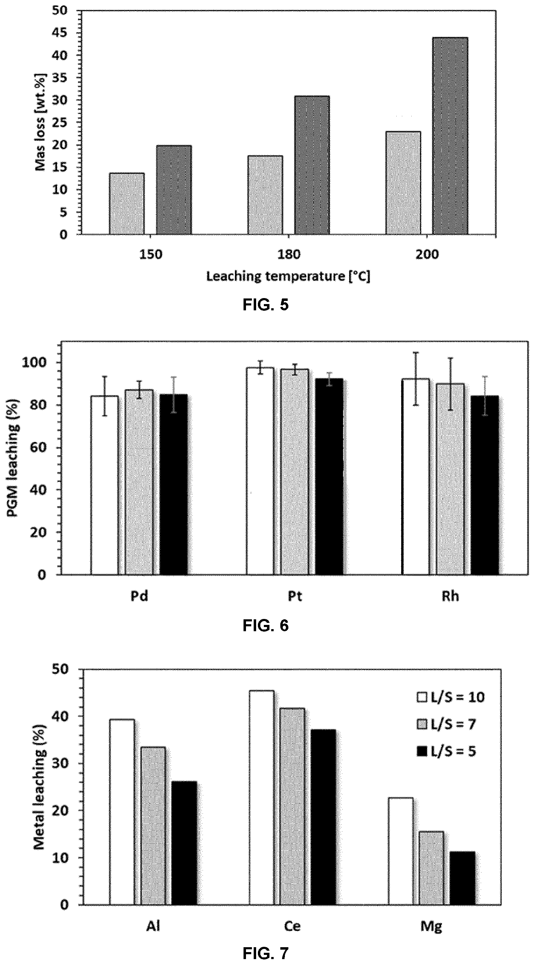

Figure 5 shows the mass loss in function of the leaching temperature, i.e. MW heating temperature. It is clear that the mass loss for the inventive process using solution No. 4 (light grey) is at every temperature significantly lower than for reference solution No. Ref. 1 (dark grey). For example, the mass loss for MW heating at 200 °C is 23.0 wt.% for solution No. 4, whereas it is 43.9 wt.% for solution No. Ref. 1, i.e. almost double. Consequently, the inventive methods and solutions have a significantly higher selectivity than prior art methods.

### Example 4

The impact of the liquid-to-solid ratio was tested by using 500 mL of solution No. 4 (1.5 M HCl and 1.5 M NaCl), and varying the amount of spent automotive catalyst added. 3 solutions were prepared by adding 50 g (L/S ratio = 10), 71.43 g (L/S ratio = 7) and 100 g (L/S ratio = 5) spent automotive catalyst, respectively.

The solutions were heated using the equipment and stirring of Example 3, heating temperature 200 °C, and heating duration 20 minutes.

Figure 6 shows the extraction efficiency for Pd, Pt and Rh for the three L/S ratios. It is clear that similar results are obtained with L/S ratio 7 and 10, whereas for L/S ratio 5 the results are slightly lower, in particular for Rh.

The mass loss was also calculated for each L/S ratio, and decreases with decreasing L/S ratio: 21 wt.% for L/S ratio = 10, 19 wt.% for L/S ratio = 7 and 16 wt.% for L/S ratio = 5. This indicates an improved selectivity by reduced dissolution of automotive catalyst matrix elements. This was further confirmed by measuring the concentration of Al, Ce and Mg as matrix elements in the leachate. Figure 7 shows that for all of Al, Ce and Mg the leaching yields are low, well below 50 %, and significantly decrease with decreasing L/S ratio.

It is further to be noticed that a lower L/S ratio means that a same amount of products can be treated with a lower volume of aqueous solution, thereby reducing the cost. Said differently, for a same volume of aqueous solution, a larger amount of products can be treated, i.e. a higher throughput is possible.

## Claims

1. A microwave (MW) assisted leaching method (1) for extracting a Platinum Group Metal (PGM) from a PGMs-comprising product, comprising:
- Providing (2) an aqueous leaching solution comprising HCl and NaCl;
- Adding (3) a product comprising a PGM to the aqueous leaching solution;
- Heating (4) the aqueous leaching solution comprising the PGM-comprising product to a temperature between 120 °C and 250 °C by means of MW heating, thereby obtaining a slurry comprising a leachate comprising the PGM and a solid residue;
- Cooling (5) the slurry; and
- Separating (6) the leachate from the solid residue, thereby obtaining the extracted PGM,
**characterized in that** the concentration of HCl in the aqueous leaching solution is between 0.25 M and 5 M, the concentration of NaCl in the aqueous leaching solution is between 0.5 M and 5 M, and the total concentration of chloride anions in the aqueous leaching solution is equal to or higher than 2 M.

2. The leaching method according to claim 1, further comprising washing (7) the solid residue after separating it from the leachate.

3. The leaching method according to any one of the preceding claims, wherein the concentration of HCl in the aqueous leaching solution is between 0.5 M and 3 M, preferably between 1 M and 2.5 M.

4. The leaching method according to any one of the preceding claims, wherein the concentration of NaCl in the aqueous leaching solution is between 1 M and 4 M, preferably between 1.5 M and 3 M.

5. The leaching method according to any one of the preceding claims, wherein the liquid-to-solid weight ratio is between 5 and 10, wherein the weight of the liquids is the weight of the aqueous solution and the weight of the solids is the weight of the product comprising the PGM.

6. The leaching method according to any one of the preceding claims, comprising heating the aqueous leaching solution to a temperature between 150 °C and 220 °C.

7. The leaching method according to any one of the preceding claims, wherein the aqueous leaching solution is heated for a duration between 1 minute and 1 hour, preferably between 2 minutes and 45 minutes, more preferably between 5 minutes and 20 minutes.

8. The leaching method according to any one of the preceding claims, wherein the PGM-comprising product comprises one or more of an EoL automotive catalyst, a Waste Electrical and Electronic Equipment (WEEE), an electrolyser, a fuel cell, a PGM-comprising ore material or a by-product from metallurgical production.

9. The leaching method according to any one of the preceding claims, wherein the aqueous leaching solution comprising the PGM-comprising product is stirred during heating.

10. The leaching method according to claim 9, wherein the stirring is performed at a speed between 10 rpm and 2000 rpm, more preferably between 50 rpm and 1000 rpm.

11. The leaching method according to any one of the preceding claims, wherein the leachate is separated from the solid residue by means of one or more of filtration, centrifugation and decantation.

12. The leaching method according to any one of the preceding claims, wherein the concentration of HCl in the aqueous leaching solution is between 1 M and 2.5 M, and the concentration of NaCl in the aqueous leaching solution is between 1.5 M and 3 M.

13. The leaching method according to any one of the preceding claims, wherein the PGM-comprising product further comprises one or more of Au, Ag, Ni, Cu, Zn, Sn and Pb, and wherein at least one of the one or more of Au, Ag, Ni, Cu, Zn, Sn and Pb are comprised in the leachate after heating.

14. Use of the method according to any one of the preceding claims for the extraction of a PGM from a product comprising a PGM.

15. Use according to claim 14, wherein the PGM-comprising product comprises one or more of an EoL automotive catalyst, a Waste Electrical and Electronic Equipment (WEEE), an electrolyser, a fuel cell, a PGM-comprising ore material or a by-product from metallurgical production.
